# EUROPEAN PATENT APPLICATION

(11) **EP 1 486 474 A2**
(43) Date of publication of application: **15.12.2004**
(21) Application number: 04012365.5
(22) Date of filing: 25.05.2004
(51) Int. Cl.: C04B 38/06, C04B 41/50, C04B 41/47, C04B 41/51

(54) **Long carbonaceous molding, long carbonaceous product, and method of production thereof**

(30) Priority: 11.06.2003 JP 2003166125
(71) Applicant: TOYO TANSO CO., LTD., Osaka-shi, Osaka 555-0011 (JP)
(72) Inventor: Ogura, Hiroaki Toyo Tanso Co., Ltd, Osaka-shi Osaka 555-0011 (JP); Toyota, Junji Toyo Tanso Co., Ltd, Osaka-shi Osaka 555-0011 (JP); Hayakawa, Hiroshi Toyo Tanso Co., Ltd, Osaka-shi Osaka 555-0011 (JP); Nozaki, Hidehiko Toyo Tanso Co., Ltd, Osaka-shi Osaka 555-0011 (JP)
(74) Representative: Leson, Thomas Johannes Alois, Dipl.-Ing.

(57) **Abstract**

Long carbonaceous moldings and long carbonaceous products as well as methods of production thereof by which carbonaceous products can be obtained without allowing twisting or curving and with less frequent occurrence of cracking etc. even when subjecting the heat treatment and which are excellent in mass productivity are provided. The long carbonaceous moldings have an aspect ratio of 3 to 20 and showing fluctuations in the density thereof of not more than 0.05 Mg/m³ throughout the whole moldings.

## Description

### BACKGROUND OF THE INVENTION

### Field of the Invention

This invention relates to a long carbonaceous molding or long carbonaceous product having an axial length such that the aspect ratio amounts to 3 to 20, and a method of production thereof.

### Description of the Related Art

Carbonaceous products are produced by adding a binding agent, such as coal tar pitch, to petroleum coke or coal coke pulverized to a particle size of several micrometers, kneading and regrinding the mixture, preparing a molding powder by particle size adjustment of the resulting powder, and molding the molding powder into prism-like or cylindrical blocks by such molding means as cold isostatic pressing (hereinafter referred to as "CIP") or metal mold or die molding, followed by heat treatment and machining.

According to those conventional methods, however, the desired long carbonaceous products are obtained by cutting carbonaceous blocks, roughly processing the same and then precisely processing the same into their product morphology, so that considerable proportions of the carbonaceous blocks are wasted, the time of processing is prolonged, the yield lowers, and the cost of production of the carbonaceous products increases. In addition, in the case of carbonaceous products, the period from charging of raw powders and other materials to shipment of finished products is very long as compared with other materials (e.g. metal products); nearly one year is required in some instances.

Long carbonaceous products have so far been produced by extrusion molding and the subsequent heat treatment, as described in JP Kokai (Japanese Patent Laid-Open Application) No. H09-115662 (Patent Document 1), for instance.

Further, the so-called near shape technique is in the process of being employed. This technique comprises shaping a carbon molding powder directly into a product form to thereby save labor in cutting carbon blocks to the utmost, reduce the amount of wasteful broken fragments resulting from processing and improve the yield of carbonaceous products. The near shape technique is disclosed in JP Kokai No. H03-146300 (Patent Document 2) and JP Kokai No. 2000-33609 (Patent Document 3), for instance. These documents describe a dry CIP apparatus improved in mass production feature in which a mandrel is inserted into a processing chamber of the dry CIP apparatus and the processing chamber is divided into two or more compartments.

However, in the case of extrusion moldings described in Patent Document 1, for instance, heat treatment for graphitization after extrusion molding results in the formation of graphite layers in the direction perpendicular to the direction of extrusion molding, giving anisotropic graphite materials, which are restricted in their uses; this is a problem.

In the case of the near shape technique described in Patent Document 2 or Patent Document 3, the moldings which can be molded are restricted in their morphology. For example, for shaping products with a U-shaped section (see, Fig. 1 of the Patent Document 2), the rubber mold and mandrel become complicated in form and structure.

Unlike other ceramic powders, carbon powders are poor in flowability, so that carbonaceous moldings produced by the near shape technique may undergo cracking or the like in some instances depending on the shape of the moldings. Long moldings with an aspect ratio of 3 or higher, in particular, have a problem in that twisting or curving of the moldings may occur or the end portions and the middle portion may differ in thickness. Even if moldings are obtained without any problem, the carbonaceous moldings may shrink in the subsequent step of heat treatment, making it impossible to obtain carbonaceous products with a prescribed size in certain instances.

Accordingly, it is an object of the present invention to provide long carbonaceous moldings and long carbonaceous products as well as methods of production thereof by which carbonaceous products can be obtained without allowing twisting or curving and with less frequent occurrence of cracking etc. even when subjecting the heat-treatment and which are excellent in mass productivity.

### SUMMARY OF THE INVENTION

The present inventors made intensive investigations in an attempt to solve the problems discussed above and, as a result, found that long carbonaceous moldings with an aspect ratio of 3 to 20 and with fluctuations in the density of the moldings of not more than 0.05 Mg/m³ throughout the whole moldings and, further, long carbonaceous products showing suppressed twisting or curving even after heat treatment such as graphitization can be obtained when a carbonaceous powder, even if it is low in flowability, is blended and kneaded with a binding agent, the mixture after kneading is ground to an average particle size of 1 to 150 µm, and the thus-obtained raw powder is filled into and molded in a rubber mold for dry isostatic pressing (hereinafter referred to as dry-CIP). Based on these findings, the present invention has now been completed.

Thus, in a first aspect, the invention provides a long carbonaceous molding having an aspect ratio of 3 to 20 and showing fluctuations in the density thereof (maximum bulk density - minimum bulk density) of not more than 0.05 Mg/m³, preferably not more than 0.03 Mg/m³, throughout the whole molding. The above molding is preferably produced from a raw material powder prepared by kneading a carbon or graphite powder or a like carbonaceous filler and a binding agent together, followed by grinding to an average particle size or diameter of 1 to 150 µm, preferably 5 to 100 µm, more preferably 10 to 50 µm. Preferably, the above raw material powder is molded to a desired morphology by dry isostatic press molding. The term "carbonaceous filler" so referred to herein includes, within the meaning thereof, petroleum-derived coke and coal-derived coke, raw and calcined forms thereof, carbon fibers, natural graphite, artificial graphite, carbon black, mesophase carbon and the like. The binding agent to be used is not particularly restricted but may be a binder in general use such as pitch or a resin. The term "aspect ratio" as used herein means the ratio of the length of the molding in the axial direction thereof to the length in the width direction perpendicular to the axial length. The long carbonaceous molding of the invention also includes those moldings which are circular or square in section with a circle or square being formed within the section.

In a second aspect, the invention provides a long carbonaceous product derived from a long carbonaceous molding having an aspect ratio of 3 to 20 and showing fluctuations in the density thereof of not more than 0.05 Mg/m³, preferably not more than 0.03 Mg/m³, throughout the whole molding by heat treatment, preferably by heat treatment at 900 to 3,000°C. The product after heat treatment preferably has an average pore radius of not greater than 10 µm, more preferably not greater than 5 µm, still more preferably not greater than 1 µm. Preferably, the product is impregnated and/or coated with at least one material selected from among metals, ceramics, carbon and resins. The above-mentioned long carbonaceous molding is preferably one produced, by dry isostatic press molding to a desired morphology, from a raw material powder prepared by kneading a carbon or graphite powder or a like carbonaceous filler and a binding agent together, followed by grinding to an average particle size of 1 to 150 µm, preferably 5 to 100 µm, more preferably 10 to 50 µm. It goes without saying that the molding pressure can be appropriately controlled according to the desired characteristics of the carbonaceous product.

In a third aspect, the invention provides a method of producing long carbonaceous moldings which comprises subjecting a raw material powder prepared by kneading a carbon or graphite powder or a like carbonaceous filler and a binding agent together, followed by grinding to an average particle size of 1 to 150 µm, preferably 5 to 100 µm, more preferably 10 to 50 µm, to dry isostatic press molding to give moldings showing fluctuations in the density thereof of not more than 0.05 Mg/m³, throughout the whole molding and having an aspect ratio of 3 to 20.

In a fourth aspect, the invention provides a method of producing long carbonaceous products which comprises subjecting a molding produced by dry isostatic press molding of a raw material powder prepared by kneading a carbon or graphite powder or a like carbonaceous filler and a binding agent together, followed by grinding to an average particle size of 1 to 150 µm, preferably 5 to 100 µm, more preferably 10 to 50 µm, and showing fluctuations in the density thereof of not more than 0.05 Mg/m³, throughout the whole molding and having an aspect ratio of 3 to 20 to heat treatment, preferably heat treatment at 900 to 3,000°C.

In accordance with one aspect of the invention, the long carbonaceous molding of the invention is a long carbonaceous molding having an aspect ratio of 3 to 20 and showing fluctuations in the density thereof of not more than 0.05 Mg/m³, preferably not more than 0.03 Mg/m³, throughout the whole molding. The raw material powder for producing the molding is preferably prepared by kneading a carbonaceous filler and a binding agent together, grinding the resulting mixture, blending the resulting powder with at least one metal powder, metal compound powder and/or ceramic powder and, after kneading, grinding the mixture to an average particle size of 10 to 100 µm, preferably 10 to 50 µm. The metal powder, metal compound powder or ceramic powder each preferably has an average particle size of 5 to 100 µm, preferably 5 to 50 µm. The mixing ratio between the carbonaceous filler and the metal powder, metal compound powder and/or ceramic powder (carbonaceous filler/metal powder, metal compound powder and/or ceramic powder) in the raw material powder is preferably 0.01 to 1, more preferably 0.2 to 0.5. The long carbonaceous molding of the invention is preferably produced by molding the above raw material powder into a desired morphology by dry isostatic pressing. The metal powder is preferably a powder of Cu, Fe, Ni, Cr, Mo, Sn, Al, Si or W, the metal compound powder is preferably a powder of MoS₂, WS₂ or a phosphate, and the ceramic powder is preferably a powder of the oxide, nitride or carbide of Al, Si, B or Zr.

In accordance with another aspect of the invention, the long carbonaceous product of the invention is a long carbonaceous product derived from a long carbonaceous molding having an aspect ratio of 3 to 20 and showing fluctuations in the density thereof of not more than 0.10 Mg/m³, preferably not more than 0.05 Mg/m³, throughout the whole molding by heat treatment. The average pore radius after heat treatment is preferably not greater than 10 µm, more preferably not greater than 5 µm. The product is preferably impregnated and/or coated with at least one material selected from among metals, ceramics, carbon and resins. The long carbonaceous molding is preferably produced, by dry isostatic press molding to a desired morphology, from a raw material powder prepared by kneading the above-mentioned carbonaceous filler and binding agent together, grinding the mixture to an average particle size of 10 to 100 µm, preferably 10 to 50 µm, blending the resulting powder with the above-mentioned metal powder, metal compound powder and/or ceramic powder having an average particle size of 5 to 100 µm, preferably 5 to 50 µm with a mixing ratio between the carbonaceous filler and the metal powder, metal compound powder and/or ceramic powder (carbonaceous filler/metal powder, metal compound powder and/or ceramic powder) of 0.01 to 1, preferably 0.2 to 0.5. The metal powder is preferably a powder of Cu, Fe, Ni, Cr, Mo, Sn, Al, Si or W, the metal compound powder is preferably a powder of MoS₂, WS₂ or a phosphate, and the ceramic powder is preferably a powder of the oxide, nitride or carbide of Al, Si, B or Zr, Al₂O₃, SiO₂, B₄C, SiC, ZrO or ZrO₂.

In accordance with a further aspect of the invention, the method of producing long carbonaceous moldings comprises subjecting a raw material powder prepared by kneading the above-mentioned carbonaceous filler and binding agent together, grinding the mixture to an average particle size of 10 to 100 µm, preferably 10 to 50 µm, blending the resulting powder with the above-mentioned metal powder, metal compound powder and/or ceramic powder having an average particle size of 5 to 100 µm, preferably 5 to 50 µm with a mixing ratio between the carbonaceous filler and the metal powder, metal compound powder and/or ceramic powder (carbonaceous filler/metal powder, metal compound powder and/or ceramic powder) of 0.01 to 1, preferably 0.2 to 0.5, to dry isostatic press molding to give moldings showing fluctuations in the density thereof of not more than 0.05 Mg/m³, preferably not more than 0.03 Mg/m³, throughout the whole molding and having an aspect ratio of 3 to 20. In carrying out the method of producing long carbonaceous moldings according to the invention, a cushioning member is preferably inserted into at least one of the upper and lower moieties of the rubber mold at a place or places to come into contact with the raw material powder in the step of dry isostatic press molding. The metal powder is preferably a powder of Cu, Fe, Ni, Cr, Mo, Sn, Al, Si or W, the metal compound powder is preferably a powder of MoS₂, WS₂ or a phosphate, and the ceramic powder is preferably a powder of the oxide, nitride or carbide of Al, Si, B or Zr.

In accordance with a further aspect of the invention, the method of producing long carbonaceous products comprises subjecting, to heat treatment, preferably heat treatment at 500°C or above, more preferably at 900°C or above, a long carbonaceous molding produced by subjecting a raw material powder prepared by kneading the above-mentioned carbonaceous filler and binding agent together, grinding the mixture to an average particle size of 10 to 100 µm, preferably 10 to 50 µm, blending the resulting powder with the above-mentioned metal powder, metal compound powder and/or ceramic powder having an average particle size of 5 to 100 µm, preferably 5 to 50 µm with a mixing ratio between the carbonaceous filler and the metal powder, metal compound powder and/or ceramic powder (carbonaceous filler/metal powder, metal compound powder and/or ceramic powder) of 0.01 to 1, preferably 0.2 to 0.5, to dry isostatic press molding to give moldings showing fluctuations in the density thereof of not more than 0.10 Mg/m³, preferably not more than 0.05 Mg/m³, throughout the whole molding and having an aspect ratio of 3 to 20. In carrying out the method of producing long carbonaceous products according to the invention, a cushioning member is preferably inserted into at least one of the upper and lower moieties of the rubber mold at a place or places to come into contact with the raw material powder in the step of dry isostatic press molding. The metal powder is preferably a powder of Cu, Fe, Ni, Cr, Mo, Sn, Al, Si or W, the metal compound powder is preferably a powder of MoS₂, WS₂ or a phosphate, and the ceramic powder is preferably a powder of the oxide, nitride or carbide of Al, Si, B or Zr.

The present invention, which has the constitution described hereinabove, can provide the above-described long carbonaceous moldings and long carbonaceous products as well as the above-described methods of production thereof by which carbonaceous products with a prescribed size can be obtained without allowing twisting or curving and with less frequent occurrence of cracking etc. even when subjecting the heat-treatment and which are excellent in mass productivity, since the moldings are uniform through the whole moldings as evaluated in terms of fluctuations in the bulk density thereof in spite of their being long.

### BRIEF DESCRIPTION OF THE DRAWINGS

Fig. 1 is a schematic sectional representation of the main parts of a dry CIP apparatus for molding the long carbonaceous molding according to the invention.
Fig. 2 is a representation of each of the long carbonaceous moldings produced in Examples 1 to 6 according to the invention.
Fig. 3 is an illustration of the sectional regions of sampling for evaluating fluctuations in bulk density as employed for the moldings of Examples 1 to 6 according to the invention.
Fig. 4(a) is a graphic representation of the results of bulk density fluctuation evaluation in Examples 1 to 3. Fig. 4(b) is a graphic representation of the results of bulk density fluctuation evaluation in Examples 4 to 6.
Fig. 5 is an illustration of each of the long carbonaceous moldings obtained in Comparative Examples 1 to 7.
Fig. 6 is an illustration of the sectional regions of sampling for evaluating fluctuations in bulk density as employed for the moldings of Comparative Examples 1 to 7.
Fig. 7(a) is a graphic representation of the results of bulk density fluctuation evaluation in Comparative Examples 1 to 4. Fig. 7(b) is a graphic representation of the results of bulk density fluctuation evaluation in Comparative Examples 5 to 7.
Fig. 8 is an illustration of the long carbonaceous molding of Example 7 according to the invention.
Fig. 9 is an illustration of the long carbonaceous molding of Comparative Example 8.
Fig. 10 is an illustration of the regions of sampling for evaluating fluctuations in bulk density as employed for the molding of Example 7 according to the invention.
Fig. 11 is a graphic representation of the results of bulk density fluctuation evaluation in Example 7 and Comparative Example 8.
Fig. 12 is a graphic representation of the results of bulk density fluctuation evaluation in Example 8 and Comparative Example 9.
Fig. 13 is a graphic representation of the relationship between pore radius and cumulative pore volume as found in Example 8.
Fig. 14 is an illustration of the sites of cutting samples for leakage resistance testing from the long carbonaceous molding shown in Fig. 8 after resin impregnation.
Fig. 15 is a schematic representation of the apparatus used in leakage resistance testing of the samples cut out as shown in Fig. 14.

### DETAILED DESCRIPTION OF PREFERRED EMBODIMENTS

Referring to the accompanying drawings, an example of the embodiment of the long carbonaceous molding of the invention is described below.

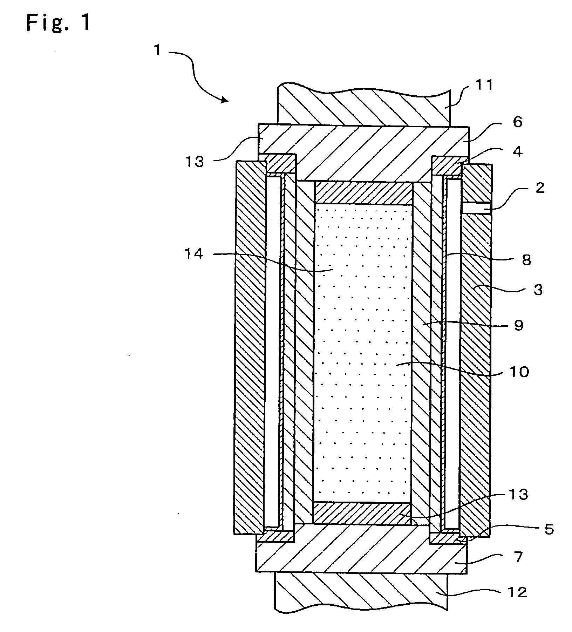

Fig. 1 is a sectional representation of the main parts of a dry CIP apparatus for molding the long carbonaceous molding according to the invention. The molding apparatus 1 shown in Fig. 1 is mainly constituted of a cylindrical pressure vessel 3 having an opening for introducing and discharging a hydraulic medium (e.g. water, an oil, an emulsion containing a rust preventive lubricant, ethylene glycol), a ring-shaped upper lid 4 and a ring-shaped lower lid 5 respectively inserted into and fixed to an upper opening and a lower opening of the pressure vessel 3, an upper punch 6 and a lower punch 7 detachably inserted into the upper lid 4 and lower lid 5, respectively, a double cylindrical pressurizing rubber mold 8 and a rubber mold for molding 9 (hereinafter referred to as "rubber mold 9" for short) both fitted in the pressure vessel 3, and press frames 11, 12 capable of coming into contact with the end faces of the upper and lower punches 6, 7 and resisting the axial force in the step of isotropic pressing by means of the hydraulic medium.

It is a matter of course that the opening 2 for introducing and discharging the hydraulic medium is fitted with a decompression mechanism or the like including a pressure generating device (a combination of a piston, a cylinder and a nonreturn valve; not shown).

Now, the working of the apparatus is described. The press frames 11, 12 are removed, the upper punch 6 is withdrawn and, in that condition, a raw material powder 10 is filled into the processing chamber 14 from above. After completion of this charging operation, the upper punch 6 is inserted into the upper lid 4, and the press frames 11, 12 are brought into contact with the end faces of the upper and lower punches 6, 7. The preparation for pressing is now completed.

The hydraulic medium from the pressure generating device is introduced into the pressure vessel 3 through the introduction/discharge opening 2, whereupon the raw material powder 10 filled in the processing chamber 14 through the rubber mold 9 is molded by isotropic pressing (compression molded). On that occasion, the axial force is resisted by the press frames 11, 12. After completion of press molding under a predetermined isotropic pressure, the pressure is reduced to thereby allow the rubber mold 9 to return to its original state (increase in diameter) and, at the same time, the press frames 11, 12 are removed, and the lower punch 7 is drawn out by means of a lifter device or the like. In this manner, a long carbonaceous molding can be shaped.

When, in the step of molding, elastic spacers 13, 13 made of a rubber or the like are fitted, as cushioning members, to the upper and lower contacting portions of the raw material powder 10, it becomes possible to inhibit the so called elephant foot phenomenon from occurring at these end portions, hence it becomes unnecessary to perform post-treatment after molding and the efficiency of product production can be further increased. Further, when the rubber mold 9 is vibrated from the surroundings on the occasion of charging of the raw material powder 10 into the rubber mold 9, it becomes possible to uniformly charge the raw material powder 10 into the rubber mold 9, with the result that the fluctuations in bulk density after molding can be further reduced.

Even when a carbon powder with a not very good flowability is used as the raw material powder, molding thereof in the above-mentioned manner can give a long carbonaceous molding having an axial length of at least 600 mm and an aspect ratio of 3 to 20 and showing fluctuations in density of not more than 0.05 Mg/m³, preferably not more than 0.03 Mg/m³, throughout the whole molding, making it possible to prevent the occurrence of curving or twisting, among others, after heat treatment, whereby the product yield can be markedly improved.

Preferably used as the raw material powder is a powder prepared by kneading a carbon or graphite powder with an average particle size of 5 to 50 µm and a binding agent together and grinding the mixture resulting from kneading to an average particle size of 1 to 150 µm, preferably 5 to 100 µm, more preferably 10 to 50 µm. Pitch or a resin binder such as a thermosetting resin can be used as the binding agent.

A powder prepared by kneading a carbonaceous filler and a binding agent together, grinding the resulting mixture, mixing the powder resulting from grinding with any of metal powders, metal compound powders or ceramic powders and, after kneading, grinding the mixture to an average particle size of 10 to 100 µm, preferably 10 to 50 µm may also be used as an alternative raw material powder. The metal powder, metal compound powder or ceramic powder preferably has an average particle size of 5 to 100 µm, preferably 5 to 50 µm, and the mixing ratio between the carbonaceous filler and the metal powder, metal compound powder and/or ceramic powder (carbonaceous filler/metal powder, metal compound powder and/or ceramic powder) in the raw material powder is preferably 0.01 to 1, preferably 0.2 to 0.5. The metal powder is preferably a powder of Cu, Fe, Ni, Cr, Mo, Sn, Al, Si or W, the metal compound powder is preferably a powder of MoS₂, WS₂ or a phosphate, and the ceramic powder is preferably a powder of the oxide, nitride or carbide of Al, Si, B or Zr.

When a carbonaceous molding having such characteristics as mentioned above is heat-treated within the temperature range of 500 to 3,000°C, a long carbonaceous product with an average pore radius of not greater than 10 µm, preferably not greater than 1 µm, can be obtained.

Further, this long carbonaceous product can be impregnated and/or coated with at least one material selected from among metals, ceramics, carbon and resins. The metals which can be used for impregnation include, but are not limited to, Cu, Al, Sb, white metal and Sn, among others. An appropriate metal species can be selected according to the intended use of the product and can be used for impregnation by any of the impregnation methods known in the art. As examples of the ceramics which can be used for impregnation and/or coating, there may be mentioned SiC and BN. An appropriate ceramics can also be selected according to the intended use of the product. In impregnating and/or coating with such ceramics, methods known in the art, for example the method comprising impregnating the carbonaceous product with a slurry containing a ceramic precursor, followed by heat treatment for ceramic formation, the CVI (chemical vapor infiltration) method, and the CVD (chemical vapor deposition) method, can be employed. Further, thermosetting resins, such as phenol resins, may be mentioned as examples of the resins for impregnation and/or coating. Pyrolytic carbon can also be used for impregnation and/or coating.

The long carbonaceous moldings of the invention and the long carbonaceous products of the invention which are derived from the moldings by heat treatment can be produced by one step of molding without causing curving or twisting in spite of their being long and having a length of at least 600 mm with an aspect ratio of 3 to 20. Unlike the case of the conventional long carbonaceous moldings, the carbon formed has no azimuth or bearings and the so-called isotropic materials with an anisotropy ratio of 1.05 to 1.5 can be obtained. The process of molding thereof can be carried out semiautomatically, and the production cost can be markedly reduced.

### EXAMPLES

The following examples illustrate the present invention more specifically.

### Examples 1 to 6

First, the production of a long carbonaceous molding using a dry CIP apparatus is described. A raw material powder was prepared by kneading a carbon powder with pitch as a binding agent, grinding the mixture resulting from kneading to an average particle size of 15 µm and further kneading the resulting powder with a copper powder having an average particle size of 5 µm. The mixing ratio between the carbon powder and copper powder was 2:3.

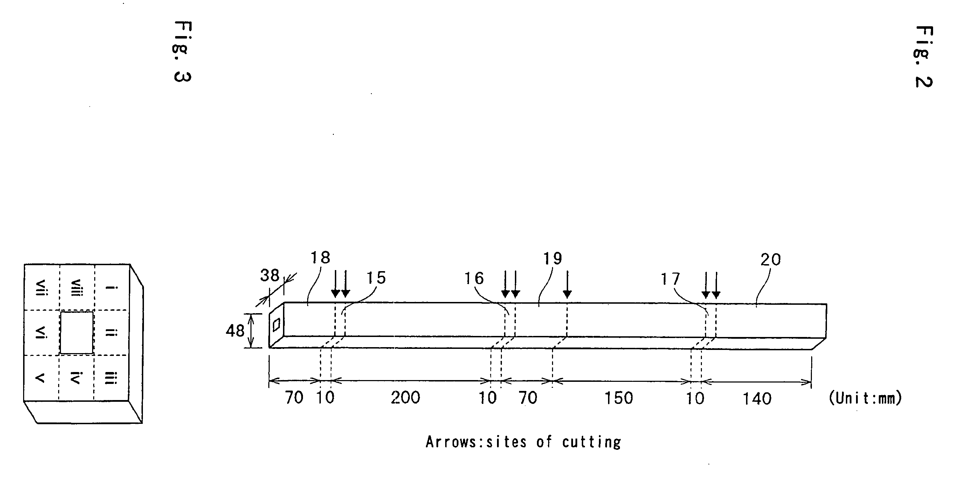

Then, a molding was produced from the above raw material powder using the dry CIP apparatus described hereinabove referring to an embodiment of the invention. More specifically, a long carbonaceous molding, as shown in Fig. 2, with a molding size of 48 x 38 x 652 (unit: mm) and a molding weight of 3,099 g was produced at a molding pressure of 343 MPa in the dry CIP apparatus.

This long carbonaceous molding was cut into segments with the sizes shown in Fig. 2 at the sites shown in Fig. 2. More specifically, a 70-mm-long molding segment 18 was cut out from the left end of the long carbonaceous molding shown in Fig. 2, then a 10-mm-long molding segment 15, a 200-mm-long molding segment, a 10-mm-long molding segment 16, a 70-mm-long molding segment 19, a 150-mm-long molding segment, a 10-mm-long molding segment 17, and a 140-mm-long molding segment 20 were cut out. Among these molding segments, the segments 15, 16 and 17 were used as the samples of Examples 1 to 3.

Then, out of the molding segments cut out in the above manner, the segments 18, 19 and 20 were heat-treated in a baking furnace at 950°C. The heat-treated molding segments 18, 19 and 20 were used as the samples of Examples 4 to 6.

### Comparative Examples 1 to 7

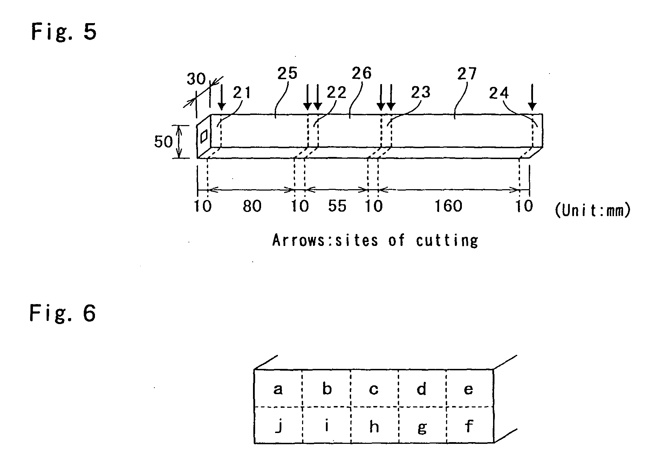

Using coke as the raw material powder and using a 750 ton press, a long carbonaceous molding, as shown in Fig. 5, with a molding size of 50 x 30 x 335 (unit: mm) and a molding weight of 1,350 g was produced by metal mold molding at a molding pressure of 343 MPa.

This long carbonaceous molding was cut into segments with the sizes shown in Fig. 5 at the sites shown in Fig. 5. More specifically, a 10-mm-long molding segment 21 was cut out from the left end of the long carbonaceous molding shown in Fig. 5, then a 80-mm-long molding segment 25, a 10-mm-long molding segment 22, a 55-mm-long molding segment 26, a 10-mm-long molding segment 23, a 160-mm-long molding segment 27, and a 10-mm-long molding segment 24 were cut out. Among these molding segments, the segments 21 to 24 were used as the samples of Comparative Examples 1 to 4.

Then, out of the molding segments cut out in the above manner, the segments 25, 26 and 27 were heat-treated in a baking furnace at 950°C. The heat-treated molding segments 25, 26 and 27 were used as the samples of Comparative Examples 5 to 7.

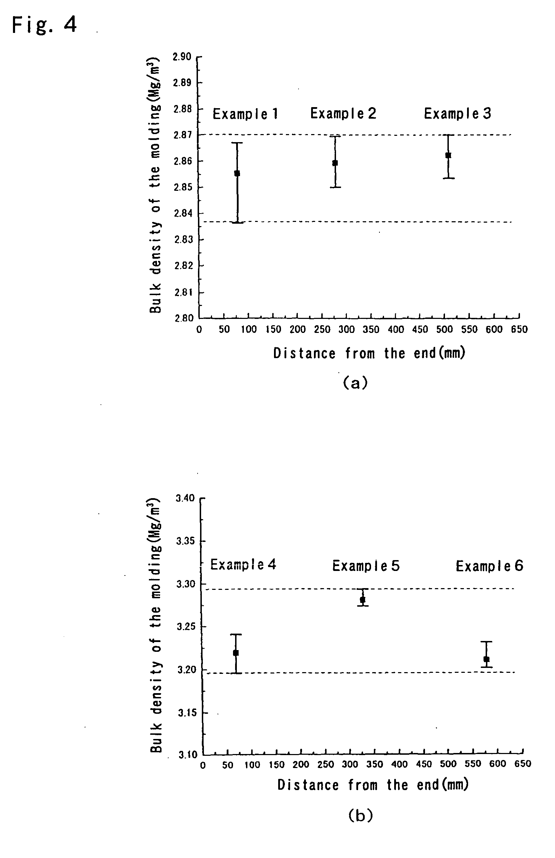

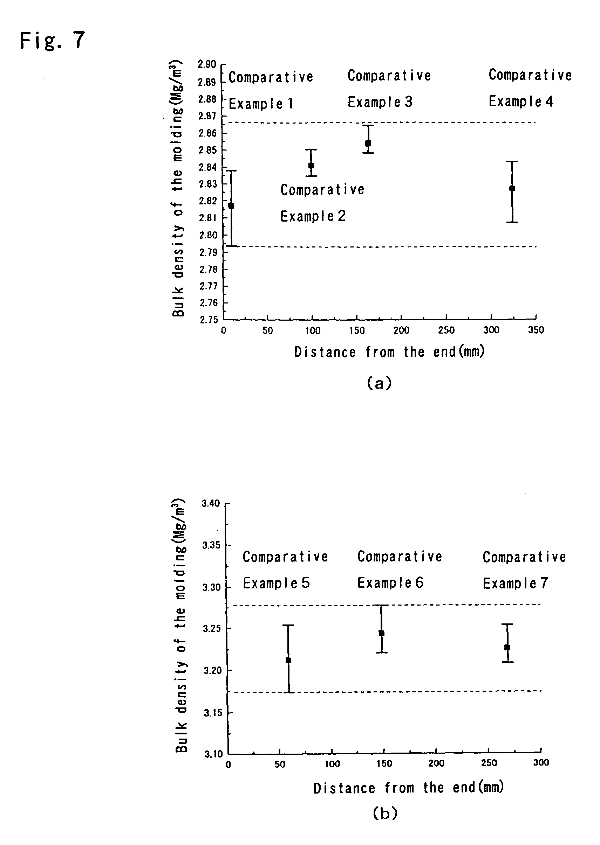

Then, for bulk density fluctuation evaluation in each example, specimens were taken from the respective sectional regions i to viii of each molding, as shown in Fig. 3. For bulk density fluctuation evaluation in each comparative example, specimens were taken from the respective sectional regions a to j of each molding, as shown in Fig. 6. Bulk density measurements were carried out by the Archimedean method (method of determining the density of a specimen based on the law of nature that a solid body in a liquid is given a buoyancy equal to the weight of the liquid it displaces) using an electronic specific gravimeter (model ED-120T, product of Mirage Boeki). In the following examples and comparative examples, the bulk density measurements were performed in the same manner. The results of the above bulk density fluctuation evaluation are shown in Fig. 4. Fig. 4(a) is a graphic representation of the measurement results in Examples 1 to 3, and Fig. 4(b) is a graphic representation of the measurement results in Examples 4 to 6. Fig. 7(a) is a graphic representation of the measurement results in Comparative Examples 1 to 4, and Fig. 7(b) is a graphic representation of the measurement results in Comparative Examples 5 to 7. In each graph, the abscissa denotes the distance from the left end of the long carbonaceous molding and the ordinate denotes the bulk density.

As shown in Fig. 4(a), the bulk densities of the specimens of Examples 1 to 3 were 2.84 to 2.87 Mg/m³, while the bulk densities of the specimens of Comparative Examples 1 to 4 were 2.79 to 2.86 Mg/m³, as shown in Fig. 7(a). From these results, it could be confirmed that the bulk density fluctuations after molding are smaller in dry CIP molding than in metal mold molding. Therefore, based on the results of Examples 1 to 3, it could be established that long carbonaceous moldings showing uniform bulk density fluctuations throughout the whole moldings in spite of their being long moldings can be produced by dry CIP molding.

As shown in Fig. 4(b), the bulk densities of the specimens of Examples 4 to 6 were 3.20 to 3.30 Mg/m³, while the bulk densities of the specimens of Comparative Examples 5 to 7 were 3.18 to 3.28 Mg/m³, as shown in Fig. 7(b). In these cases, the middle portions after heat treatment showed higher values as compared with the terminal portions. However, since the dry CIP molding product was 652 mm long and the metal mold molding product was 335 mm long, the bulk density fluctuations were smaller in dry CIP molding upon comparison on the same length basis. Thus, based on the results of Examples 4 to 6, it could be established that long carbonaceous moldings showing uniform bulk density fluctuations throughout the whole moldings in spite of their being long moldings can be produced by dry CIP molding.

### Example 7

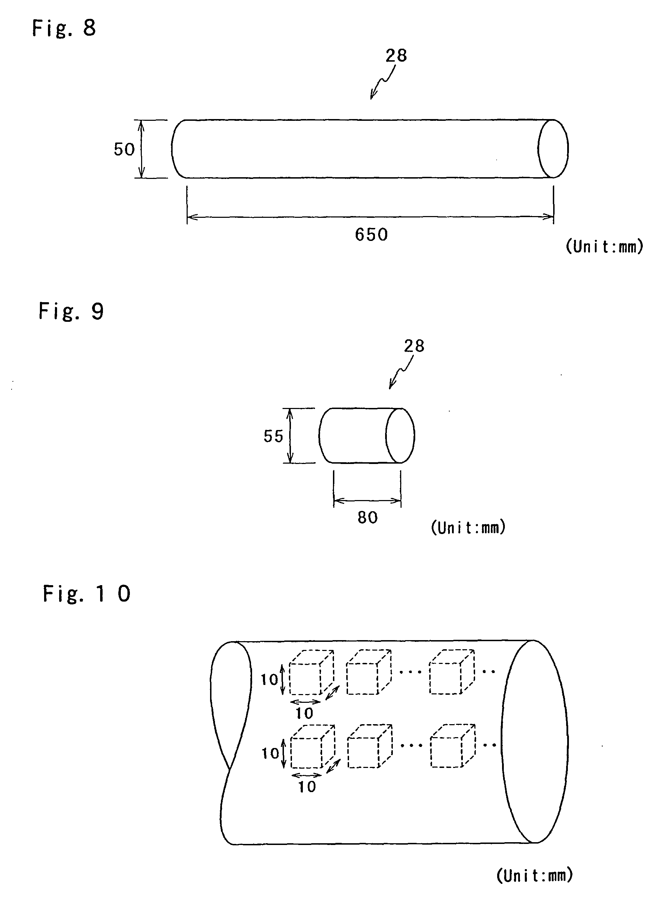

A raw material powder was prepared by kneading a carbon powder with pitch as a binding agent and grinding the mixture after kneading to an average particle size of 30 µm. Then, using the dry CIP apparatus described hereinabove referring to an embodiment of the invention, a molding was produced from the raw material powder. More specifically, a long carbonaceous molding 28, as shown in Fig. 8, with a molding size of ø 50 x 650 (unit: mm) and a molding weight of 2,050 g was produced at a molding pressure of 100 MPa in the dry CIP apparatus and then it was heat-treated in a baking furnace at 1,200°C. This heat-treated molding 28 was used as the sample of Example 7.

### Comparative Example 8

Using a powder prepared by kneading a raw material powder with pitch as a binding agent and grinding the mixture after kneading to an average particle size of 30 µm, an ordinary metal mold molding 29, as shown in Fig. 9, with a molding size of ø 60 x 85 (unit: mm) and a molding weight of 400 g was produced on a 100 ton press and then it was heat-treated in a baking furnace at 1,200°C. This heat-treated metal mold molding 29 was used as the sample of Comparative Example 8.

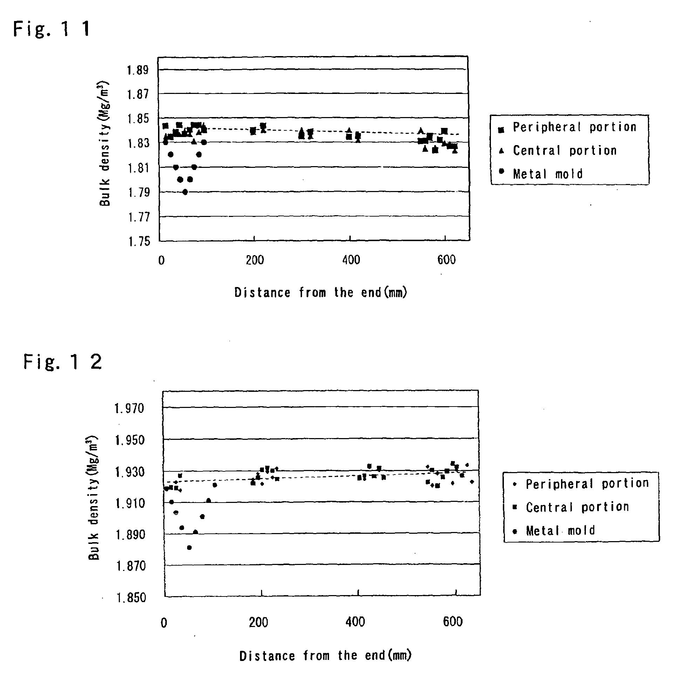

Then, for evaluating the bulk density fluctuations in the sample of Example 7, a plurality of cubic specimens (each edge being 10 mm long) were cut out from the peripheral portion and central portion of the molding, and each specimen was measured for bulk density. For evaluating the bulk density fluctuations in the sample of Comparative Example 8, a plurality of cubic specimens (each edge being 10 mm long) were cut out only from the peripheral portion of the molding, and each specimen was measured for bulk density. The results of these bulk density fluctuation measurements are shown in Fig. 11. In Fig. 11, the abscissa of the graph denotes the distance from the left end of the long carbonaceous molding and the ordinate denotes the bulk density. The indications "peripheral portion" and "central portion" are for the specimens of Example 7, and the indication "metal mold" is for the specimens of Comparative Example 8.

As shown in Fig. 11, the bulk densities of the specimens of Example 7 were 1.82 to 1.84 Mg/m³, and the bulk densities of the specimens of Comparative Example 8 were 1.79 to 1.84 Mg/m³. From these results, it could be confirmed that the bulk density fluctuations after molding were smaller in dry CIP molding than in metal mold molding. Thus, based on the results of Example 7, it could be established that long carbonaceous molding showing uniform bulk density fluctuations throughout the whole moldings in spite of their being long moldings can be produced by dry CIP molding.

### Example 8

The sample of Example 7 was subjected to resin impregnation and used as the sample of Example 8.

### Comparative Example 9

The sample of Comparative Example 8 was subjected to resin impregnation and used as the sample of Comparative Example 9.

Then, for evaluating the bulk density fluctuations in the sample of Example 8, a plurality of cubic specimens (each edge being 10 mm long) were cut out from the peripheral portion and central portion of the molding in the same manner as shown in Fig. 10, and each specimen was measured for bulk density. For evaluating the bulk density fluctuations in the sample of Comparative Example 9, a plurality of cubic specimens (each edge being 10 mm long) were cut out only from the peripheral portion of the molding, and each specimen was measured for bulk density. The results of these bulk density fluctuation measurements are shown in Fig. 12. In Fig. 12, the abscissa of the graph denotes the distance from the left end of the long carbonaceous molding and the ordinate denotes the bulk density. The indications "peripheral portion" and "central portion" are for the specimens of Example 8, and the indication "metal mold" is for the specimens of Comparative Example 9.

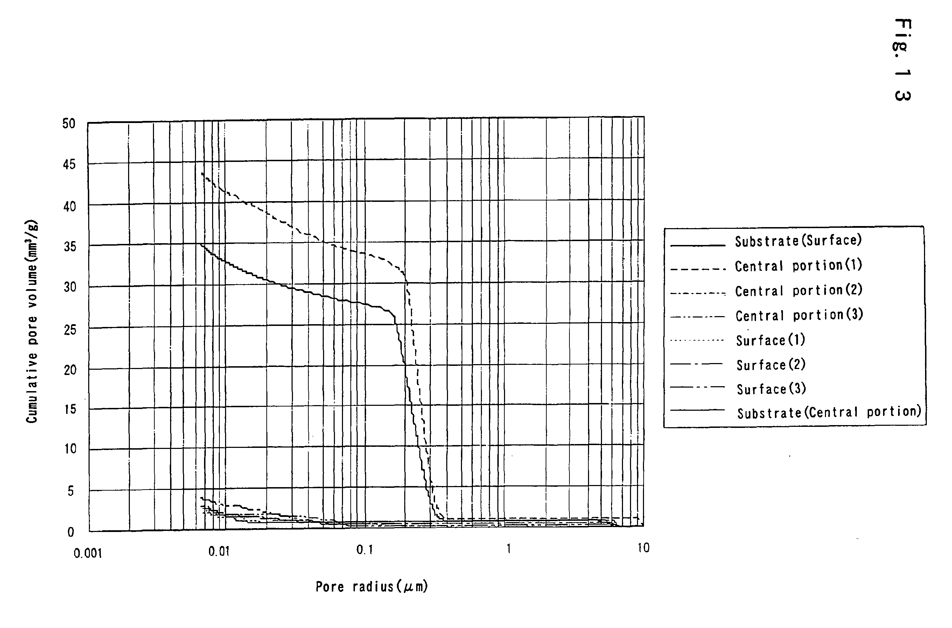

Further, the relationship between pore radius and cumulative pore volume was examined for the sample of Example 8. The results are shown in Fig. 13.

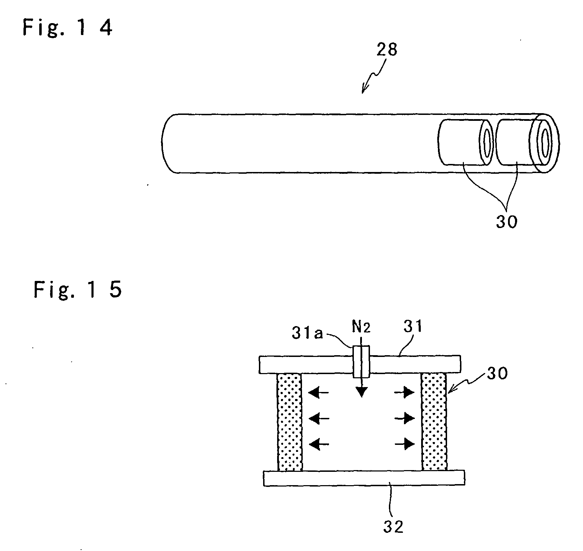

Further, for leakage resistance testing of the sample of Example 8, moldings 30 with a size of ø 40/ø 30 x 50 (unit: mm) were cut out of the molding 28 with a size of ø 50 x 650 (unit: mm). As shown in Fig. 15, one end and the other end of each molding 30 cut out were tightly closed with plates 31, 32 so as to inhibit gas passage through between the molding 30 and each of the plate 31, 32. The outside surface of the molding 30 was sprayed with soapy water, and nitrogen was sent to the inside space through a vent 31a disposed in one end plate 31 under a pressure of 0.5 MPa for 20 minutes or under a pressure of 0.7 MPa for 20 minutes for leakage resistance evaluation. The reason why soapy water was sprayed on the outside surface of the molding 30 on that occasion is that when nitrogen leakage occurred, foaming occurred, indicating the leakage.

As shown in Fig. 12, the bulk densities of the specimens of Example 8 were 1.92 to 1.94 Mg/m³, and the bulk densities of the specimens of Comparative Example 9 were 1.88 to 1.93 Mg/m³. From these results, it could be confirmed that the bulk density fluctuations after molding and resin impregnation were smaller in dry CIP molding than in metal mold molding. Thus, based on the results of Example 8, it could be established that long carbonaceous moldings showing uniform bulk density fluctuations throughout the whole moldings in spite of their being long moldings can be produced by dry CIP molding.

From the data shown in Fig. 13, it is evident that a sufficient extent of resin impregnation can be attained until the central portion of the molding on the occasion of resin impregnation and that the difference in pore volume between the molding surface and the central portion of the molding is not great.

Furthermore, no nitrogen leakage was observed everywhere in the inside space formed by the molding 30 and the plates 31, 32 under the pressure of 0.5 MPa or 0.7 MPa.

Since various design changes can be made in carrying out the present invention without departing from the scopes of the claims, the above-described modes of embodiment and examples are by no means limitative of the scope of the invention.

Long carbonaceous moldings and long carbonaceous products as well as methods of production thereof by which carbonaceous products can be obtained without allowing twisting or curving and with less frequent occurrence of cracking etc. even when subjecting the heat treatment and which are excellent in mass productivity are provided. The long carbonaceous moldings have an aspect ratio of 3 to 20 and showing fluctuations in the density thereof of not more than 0.05 Mg/m³ throughout the whole moldings.

## Claims

1. A long carbonaceous molding having an aspect ratio of 3 to 20 and showing fluctuations in the density thereof of not more than 0.05 Mg/m³ throughout the whole molding.

2. A long carbonaceous molding as set forth in Claim 1 which is produced from a raw material powder prepared by kneading a carbonaceous filler with a binding agent and grinding the mixture after kneading to an average particle size of 1 to 150 µm.

3. A long carbonaceous molding as set forth in Claim 2 which is produced from the raw material powder by dry isostatic press molding to give a desired morphology.

4. A long carbonaceous product derived from a long carbonaceous molding with an aspect ratio of 3 to 20 by heat treatment, said molding showing fluctuations in the density thereof of not more than 0.05 Mg/m³ throughout the whole molding.

5. A long carbonaceous product as set forth in Claim 4 which shows an average pore radius of not greater than 10 µm after heat treatment.

6. A long carbonaceous product as set forth in Claim 4 or 5 which is impregnated and/or coated with at least one material selected from among metals, ceramics, carbon and resins.

7. A long carbonaceous product as set forth in any of Claims 4 to 6, wherein the long carbonaceous molding is produced by giving a desired morphology to a raw material powder prepared by kneading a carbonaceous filler with a binding agent and grinding the mixture after kneading to an average particle size of 1 to 150 µm by dry isostatic press molding.

8. A method of producing long carbonaceous moldings which comprises subjecting a raw material powder prepared by kneading a carbonaceous filler with a binding agent and grinding the mixture after kneading to an average particle size of 1 to 150 µm to dry isostatic press molding to give a molding showing fluctuations in the density thereof of not more than 0.05 Mg/m³ throughout the whole molding and having an aspect ratio of 3 to 20.

9. A method of producing long carbonaceous moldings as set forth in Claim 8, wherein a cushioning member is inserted into at least one of the upper and lower moieties of the rubber mold at that site which comes into contact with the raw material powder on the occasion of dry isostatic press molding.

10. A method of producing long carbonaceous products which comprises subjecting, to heat treatment, a molding produced from a raw material powder prepared by kneading a carbonaceous filler with a binding agent and grinding the mixture after kneading to an average particle size of 1 to 150 µm by dry isostatic press molding, said molding showing fluctuations in the density thereof of not more than 0.05 Mg/m³ throughout the whole molding and having an aspect ratio of 3 to 20.

11. A method of producing long carbonaceous products as set forth in Claim 10, wherein a cushioning member is inserted into at least one of the upper and lower moieties of the rubber mold at that site which comes into contact with the raw material powder on the occasion of dry isostatic press molding.

12. A long carbonaceous molding as set forth in Claim 1 which is produced from a raw material powder prepared by kneading a carbonaceous filler with a binding agent, grinding the mixture after kneading, and blending the resulting powder with at least one of metal powders, metal compound powders and ceramic powders.

13. A long carbonaceous molding as set forth in Claim 12, wherein the grinding is carried out to give an average particle size of 10 to 100 µm.

14. A long carbonaceous molding as set forth in Claim 12, wherein the metal powder, metal compound powder or ceramic powder has an average particle size of 5 to 100 µm.

15. A long carbonaceous molding as set forth in Claim 12, wherein the mixing ratio between the carbonaceous filler and the metal powder, metal compound powder and/or ceramic powder (carbonaceous filler/metal powder, metal compound powder and/or ceramic powder) in the raw material powder is 0.01 to 1.

16. A long carbonaceous molding as set forth in any of Claims 12 to 15 which is produced by giving a desired morphology to the raw material powder by dry isostatic press molding.

17. A long carbonaceous product derived from a long carbonaceous molding having an aspect ratio of 3 to 20 by heat treatment and showing fluctuations in the density thereof of not more than 0.10 Mg/m³ throughout the whole molding.

18. A long carbonaceous product as set forth in Claim 17 which has an average pore radius of not greater than 10 µm after heat treatment.

19. A long carbonaceous product as set forth in Claim 17 or 18 which is impregnated and/or coated with at least one material selected from among metals, ceramics, carbon and resins.

20. A long carbonaceous product as set forth in Claim 17 or 18, wherein the long carbonaceous molding is produced by giving, by dry isostatic press molding, a desired morphology to a raw material powder prepared by kneading a carbonaceous filler with a binding agent, grinding the mixture after kneading to an average particle size of 10 to 100 µm and blending the resulting powder with a metal powder, metal compound powder and/or ceramic powder with an average particle size of 5 to 100 µm at a mixing ratio between the carbonaceous filler and the metal powder, metal compound powder and/or ceramic powder (carbonaceous filler/metal powder, metal compound powder and/or ceramic powder) being 0.01 to 1.

21. A method of producing long carbonaceous moldings which comprises subjecting, to dry isostatic press molding, a raw material powder prepared by kneading a carbonaceous filler with a binding agent, grinding the mixture after kneading to an average particle size of 10 to 100 µm and blending the resulting powder with a metal powder, metal compound powder and/or ceramic powder with an average particle size of 5 to 100 µm at a mixing ratio between the carbonaceous filler and the metal powder, metal compound powder and/or ceramic powder (carbonaceous filler/metal powder, metal compound powder and/or ceramic powder) of 0.01 to 1 to give a molding showing fluctuations in the density thereof of not more than 0.05 Mg/m³ throughout the whole molding and having an aspect ratio of 3 to 20.

22. A method of producing long carbonaceous moldings as set forth in Claim 21, wherein a cushioning member is inserted into at least one of the upper and lower moieties of the rubber mold at that site which comes into contact with the raw material powder on the occasion of dry isostatic press molding.

23. A method of producing long carbonaceous products which comprises subjecting, to heat treatment, a long carbonaceous molding produced, by dry isostatic press molding, from a raw material powder prepared by kneading a carbonaceous filler with a binding agent, grinding the mixture after kneading to an average particle size of 10 to 100 µm and blending the resulting powder with a metal powder, metal compound powder and/or ceramic powder with an average particle size of 5 to 100 µm at a mixing ratio between the carbonaceous filler and the metal powder, metal compound powder and/or ceramic powder (carbonaceous filler/metal powder, metal compound powder and/or ceramic powder) of 0.01 to 1 to give a molding showing fluctuations in the density thereof of not more than 0.05 Mg/m³ throughout the whole molding and having an aspect ratio of 3 to 20.

24. A method of producing long carbonaceous products as set forth in Claim 23, wherein a cushioning member is inserted into at least one of the upper and lower moieties of the rubber mold at that site which comes into contact with the raw material powder on the occasion of dry isostatic press molding.

25. A long carbonaceous molding as set forth in any of Claims 12 to 16, wherein the metal powder is a powder of Cu, Fe, Ni, Cr, Mo, Sn, Al, Si or W, the metal compound powder is a powder of MoS₂, WS₂ or a phosphate, and the ceramic powder is a powder of the oxide, nitride or carbide of Al, Si, B or Zr.

26. A long carbonaceous product as set forth in Claim 20, wherein the metal powder is a powder of Cu, Fe, Ni, Cr, Mo, Sn, Al, Si or W, the metal compound powder is a powder of MoS₂, WS₂ or a phosphate, and the ceramic powder is a powder of the oxide, nitride or carbide of Al, Si, B or Zr.

27. A method of producing long carbonaceous moldings as set forth in Claim 21 or 22, wherein the metal powder is a powder of Cu, Fe, Ni, Cr, Mo, Sn, Al, Si or W, the metal compound powder is a powder of MoS₂, WS₂ or a phosphate, and the ceramic powder is a powder of the oxide, nitride or carbide of Al, Si, B or Zr.

28. A method of producing long carbonaceous products as set forth in Claim 23 or 24, wherein the metal powder is a powder of Cu, Fe, Ni, Cr, Mo, Sn, Al, Si or W, the metal compound powder is a powder of MoS₂, WS₂ or a phosphate, and the ceramic powder is a powder of the oxide, nitride or carbide of Al, Si, B or Zr.
